# FASCICULE DE BREVET EUROPEEN

(11) **EP 0 534 825 B1**
(45) Date de publication et mention de la délivrance du brevet: **25.10.1995**
(21) Numéro de dépôt: 92402551.3
(22) Date de dépôt: 17.09.1992
(51) Int. Cl.: G01M 3/20

(54) **Détecteur de fuite à hélium**
Heliumleckdetektor
Helium leak detector

(30) Priorité: 24.09.1991 FR 9111755
(43) Date de publication de la demande: 31.03.1993
(73) Titulaire: ALCATEL CIT, 75008 Paris (FR)
(72) Inventeur: Baret, Gilles, F-74000 Annecy (FR); Gevaud, Roland, F-74370 Pringy (FR)
(74) Mandataire: Gosse, Michel

(56) Documents cités:
- EP-A- 0 070 341
- EP-A- 0 268 777
- FR-A- 2 452 699
- US-A- 4 893 497

## Description

La présente invention concerne un détecteur de fuite à hélium comprenant un analyseur de gaz, une pompe secondaire comportant au moins du côté de son refoulement un étage du type Holweck, ladite pompe étant d'un type permettant de descendre la pression d'aspiration à une valeur au moins égale à 10⁻⁴ mbar et sa pression au refoulement étant suffisamment élevée pour être compatible avec la pression limite d'aspiration d'un groupe de pompage primaire de type sec composé d'au moins deux étages.

Un détecteur de ce type est particulièrement intéressant puisqu'il ne comporte aucune pompe à joint d'huile et peut être utilisé dans les applications où le vide doit être très propre. En outre, dans le cas du fonctionnement en reniflage où le flux pompé est faible, des pompes sèches de faible débit sont suffisantes et présentent donc l'avantage d'être moins lourdes et encombrantes que des pompes à palettes à joint d'huile. Ces pompes peuvent, en outre, fonctionner aisément dans toutes les positions.

Le brevet des Etats-Unis n°4 893 497 décrit un détecteur de fuite à hélium de ce type.

Dans ce document, l'introduction d'hélium dans le détecteur, en cas de fuite du récipient contrôlé, est effectuée au refoulement d'une pompe secondaire dont la pression est d'environ 40 mbar pour les petites fuites. Ceci n'assure pas une excellente sensibilité pour les fuites très faibles. En outre, il est prévu une conduite équipée d'une vanne de purge, également au niveau du refoulement de la pompe secondaire, donc aussi à 40 mbar, pour dépolluer le détecteur pour un contrôle ultérieur d'un récipient dans le cas où une fuite a été constatée lors d'un contrôle précédent d'un récipient.

Effectuée à ce niveau de pression, la purge n'assure pas une dépollution rapide du détecteur au niveau de la pompe secondaire.

On connaît aussi par le document FR-A-2 452 699 un détecteur comportant un organe de prélèvement relié, d'une part, à une sonde de reniflage et, par une canalisation, entre les deux étages d'une pompe à vide préliminaire, et d'autre part à l'entrée basse pression du détecteur.

La présente invention a pour but de proposer un détecteur du type précédemment défini, applicable au fonctionnement en reniflage, assurant une très bonne sensibilité et surtout permettant une très bonne et rapide récupération du détecteur lors d'une pollution de celui-ci provenant d'une fuite constatée d'un récipient contrôlé.

L'invention a ainsi pour objet un détecteur de fuite à hélium comprenant un analyseur de gaz, une pompe secondaire comportant au moins du côté de son refoulement un étage du type Holweck, ladite pompe étant d'un type permettant de descendre la pression d'aspiration à une valeur au moins égale à 10⁻⁴ mbar et sa pression au refoulement étant suffisamment élevée pour être compatible avec la pression d'aspiration d'un groupe de pompage primaire de type sec composé d'au moins deux étages, caractérisé en ce que ladite pompe secondaire est reliée à la sortie basse pression d'un organe de prélèvement, en un point de ladite pompe où son régime d'écoulement est moléculaire, une sonde de reniflage étant raccordée du côté haute pression dudit organe de prélèvement, ce côté haute pression étant en outre relié audit groupe de pompage primaire entre ses deux dits étages.

On va maintenant donner la description d'un exemple de mise en oeuvre de l'invention en se reportant au dessin annexé dans lequel :
- la figure 1 est un schéma-bloc représentant un détecteur de fuite à hélium selon l'invention.
- la figure 2 est une demi-coupe axiale d'une pompe secondaire pouvant être utilisée dans un détecteur selon l'invention.

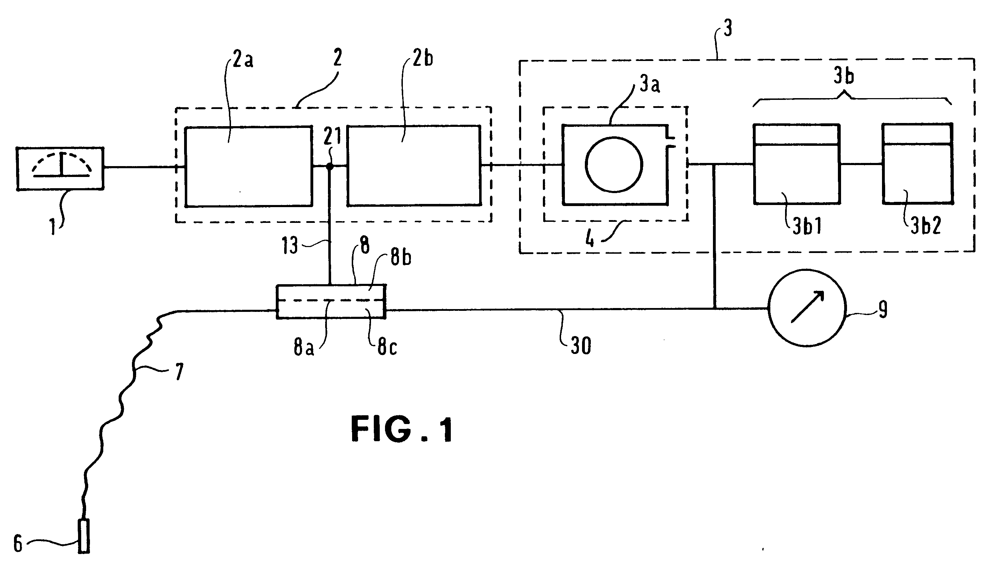

En se référant à la figure 1, on voit un analyseur de gaz 1 relié à une pompe secondaire 2 à deux étages 2a, 2b dont au moins l'étage 2b, situé du côté du refoulement, est un étage du type Holweck.

Cette pompe secondaire 2 permet d'atteindre à l'aspiration un vide d'au moins 10⁻⁴ mbar tout en ayant à son refoulement une pression compatible avec la pression d'aspiration d'un groupe de pompage primaire 3 de type sec. Ce groupe de pompage primaire 3 comporte au moins deux étages 3a et 3b.

Dans l'exemple représenté, l'étage 3a est une pompe à palettes sèche logée dans un carter étanche 4. L'étage 3b est ici constitué d'une pompe à membrane, elle-même constituée de deux étages 3b₁ et 3b₂ en série.

L'étage 3b aspire dans le carter étanche 4 et la pompe à palettes sèche 3a refoule dans ce carter 4.

La pression au refoulement de la pompe secondaire 2 est de l'ordre de 10 mbar qui est donc compatible avec la pression d'aspiration du groupe de pompage primaire 3. Ce groupe de pompage primaire 3, de type sec, pourrait être composé d'autres types de pompes sèches, comme par exemple celles décrites dans le document antérieur cité dans l'introduction.

Selon l'invention, le détecteur comporte un organe de prélèvement 8, comprenant par exemple une vanne à aiguille ou, comme représenté, une membrane poreuse 8a dont le côté basse pression 8b est relié, par une conduite 13, en un point intermédiaire 21 de la pompe secondaire 2 où le régime d'écoulement de la pompe est moléculaire, par exemple 10⁻² mbar.

Une sonde de reniflage 6 est reliée d'autre part, par un tube de liaison 7, à l'organe de prélèvement 8, du côté 8c, c'est-à-dire, du côté haute pression de la membrane poreuse 8a.

La pression dans ce compartiment 8c correspond à celle à l'aspiration de l'étage 3b du groupe de pompage primaire 3, par exemple environ 50 mbar.

Enfin, le même côté haute pression 8c de l'organe de prélèvement 8 est relié au groupe de pompage primaire 3 entre ses deux étages 3a et 3b.

Une jauge de pression 9 est reliée à la canalisation 30 reliant l'organe de prélèvement 8 au groupe de pompage primaire 3. Cette jauge de pression 9 permet de surveiller l'état de la sonde 6 et notamment de constater qu'elle est bouchée en observant une éventuelle descente de la pression.

L'organe de prélèvement 8 est situé dans le détecteur lui-même et la conduite 13 est donc très courte. Le tube de liaison 7 de la sonde 6 est amovible et le retrait du tube 7 assure l'obturation de l'organe de prélèvement 8.

Ainsi, le flux aspiré par la sonde 6, en régime visqueux, est très rapidement apporté à l'organe de prélèvement 8 assurant ainsi un temps de transfert assez court. Par ailleurs, la liaison de l'organe de prélèvement 8 au point 21 du groupe de pompage secondaire 2, c'est-à-dire relativement près de l'analyseur 1 où l'écoulement est déjà moléculaire permet d'assurer une très bonne sensibilité.

L'installation permet ainsi de mesurer aussi bien de très faibles fuites que des fuites importantes.

Enfin, grâce au point de raccordement 21 de l'organe de prélèvement 8, l'installation possède un excellent pouvoir de récupération après une pollution de l'appareil par de l'hélium provenant d'une fuite d'une enceinte contrôlée précédemment, et ceci sans effectuer une purge mais d'une manière automatique et continue.

En effet, une fois que la sonde n'aspire plus d'hélium mais de l'air, celui-ci assure un balayage de la partie haute pression de la pompe secondaire 2 (en aval du point 21) ainsi que du groupe de pompage primaire 3, tout en constituant un écran qui empêche l'hélium accumulé en aval de remonter vers le spectromètre 1.

On peut donc très rapidement effectuer un nouveau contrôle d'un autre récipient.

L'expérience a confirmé ce fait. En effet, si après une fuite on ôte le tube de liaison 7 (ce qui, a-t-on dit plus haut, obture automatiquement l'organe de prélèvement 8) le signal d'hélium sur le spectromètre 1 remonte, car alors l'hélium, accumulé en aval du point 21, n'est plus arrêté par le balayage du courant d'air qui existait avant le retrait de la sonde 6 ; alors que, si il n'y a pas eu de fuite au cours des essais précédents et donc aucune accumulation d'hélium dans l'appareil, le fait de retirer la sonde provoque au contraire, une baisse légère du signal d'hélium qui correspondait, avant le retrait de la sonde, à la proportion d'hélium dans l'air. En effet, dans ce cas, le retrait de la sonde fait que l'appareil pompe en cul de sac et on constate un signal d'hélium inférieur à celui correspondant à la pression partielle d'hélium dans l'air.

On voit ainsi que l'appareil selon l'invention permet une excellente récupération après un essai au cours duquel une fuite a été constatée.

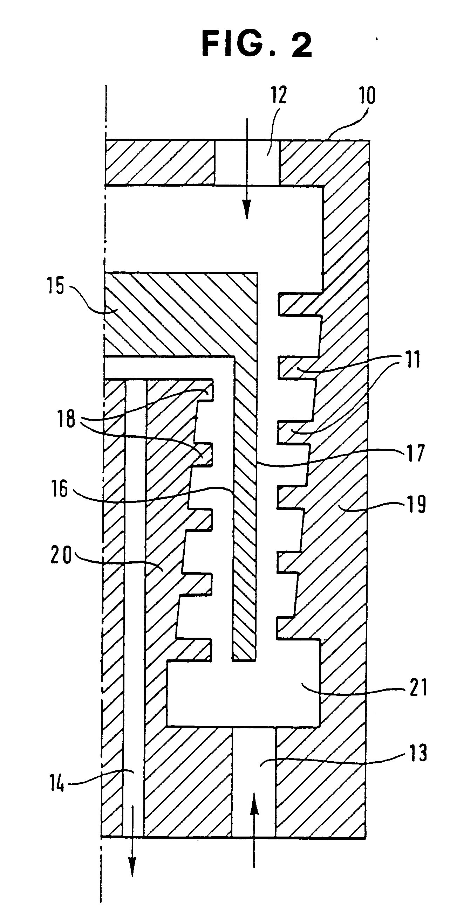

La figure 2 montre une forme de réalisation d'une pompe 2 du type Holweck à deux étages concentriques, telle qu'elle est utilisée, de préférence, dans la présente installation. Selon cette réalisation, la pompe comporte un carter extérieur 10 dans lequel sont usinées des rainures hélicoïdales 11, dont la profondeur décroît depuis un orifice d'aspiration 12 jusqu'à un espace 21 situé entre les deux étages de pompage. Dans cet espace 21 débouche la canalisation intermédiaire 13 assurant la liaison avec l'organe de prélèvement 8 de la figure 1.

La pompe 2 comporte un rotor 15 tournant à grande vitesse entre deux stators 19 et 20. La zone située entre une face 17 du rotor 15 et le stator 19 constitue un étage de pompage basse pression, et la zone située entre une face 16 du rotor 15 et le stator 20, un étage de pompage haute pression. Le stator 20 comporte des rainures hélicoïdales usinées 18, dont la profondeur décroît depuis l'espace 21 jusqu'à une tubulure de refoulement 14.

## Revendications

1. Détecteur de fuite à l'hélium comprenant un analyseur de gaz (1), une pompe secondaire (2) comportant au moins du côté de son refoulement un étage (2b) du type Holweck, ladite pompe (2) étant d'un type permettant de descendre la pression d'aspiration à une valeur au moins égale à 10⁻⁴ mbar et sa pression au refoulement étant suffisamment élevée pour être compatible avec la pression d'aspiration d'un groupe de pompage primaire (3) de type sec composé d'au moins deux étages (3a, 3b), caractérisé en ce que ladite pompe secondaire (2) est reliée à la sortie basse pression (8b) d'un organe de prélèvement (8) en un point (21) de ladite pompe où son régime d'écoulement est moléculaire, une sonde de reniflage (6) étant raccordée du côté haute pression (8c) dudit organe de prélèvement (8), ce côté haute pression (8c) étant en outre relié audit groupe de pompage primaire entre ses deux dits étages (3a, 3b).

2. Détecteur selon la revendication 1, caractérisé en ce que le premier étage (3a) dudit groupe de pompage primaire (3) est une pompe à palettes sèche logée dans un carter étanche (4), ladite pompe à palette refoulant dans ce carter (4), et ledit deuxième étage (3b) dudit groupe de pompage aspirant directement dans ledit carter (4).

## Patentansprüche

1. Heliumleckdetektor mit einem Gasanalysator (1), einer Sekundärpumpe (2), die zumindest auf der Auslaßseite eine Holweck-Stufe (2b) besitzt und auf der Saugseite einen Druck von 10⁻⁴ mbar oder weniger zu erzielen erlaubt, während der Auslaßdruck hinreichend hoch ist, um mit dem Saugdruck einer aus mindestens zwei Stufen (3a, 3b) bestehenden Primärpumpgruppe (3) vom trockenlaufenden Typ kompatibel zu sein, dadurch gekennzeichnet, daß die Sekundärpumpe (2) an den Niederdruckausgang (8b) eines Entnahmeorgans (8) in einem Punkt (21) der Pumpe angeschlossen ist, an dem das Strömungsregime molekular ist, und daß eine Schnüffelsonde (6) auf der Hochdruckseite (8c) des Entnahmeorgans (8) angeschlossen ist und diese Hochdruckseite (8c) weiter an die Primärpumpgruppe zwischen ihren beiden Stufen (3a, 3b) angeschlossen ist.

2. Detektor nach Anspruch 1, dadurch gekennzeichnet, daß die erste Stufe (3a) der Primärpumpgruppe (3) eine trockenlaufende Schieberpumpe ist, die in einem dichten Gehäuse (4) untergebracht ist, daß der Auslaß der Schieberpumpe in diesem Gehäuse (4) liegt und daß die zweite Stufe (3b) der Primärpumpgruppe direkt aus diesem Gehäuse (4) ansaugt.

## Claims

1. Helium leak detector comprising a gas analyser (1), a secondary pump (2) including at least a Holweck type outlet stage (2b), said pump (2) being of a type enabling the inlet pressure to be reduced to a value at least equal to 10⁻⁴ mbar and its outlet pressure being sufficiently high to be compatible with the inlet pressure of a dry primary pump set (3) comprising at least two stages (3a, 3b), characterised in that said secondary pump (2) is connected to the low-pressure outlet (8b) of a sampling unit (8) at a point (21) on said pump at which its flow is molecular, a snorter probe (6) is connected to the high-pressure side (8c) of said sampling unit (8), and said high-pressure side (8c) is also connected to said primary pump set between its two stages (3a, 3b).

2. Detector according to claim 1 characterised in that the first stage (3a) of said primary pump set (3) is a dry vane pump in a sealed casing (4), the outlet of said vane pump is in this casing (4) and the inlet of said second stage (3b) of said pumping set is in said casing (4).
